# EUROPEAN PATENT SPECIFICATION

(11) **EP 0 360 402 B1**
(45) Date of publication and mention of the grant of the patent: **15.02.1995**
(21) Application number: 89308052.3
(22) Date of filing: 08.08.1989
(51) Int. Cl.: G09G 1/16, G06T 1/00

(54) **Digital data display system**
Anzeigesystem für digitale Daten
Système d'affichage de données numériques

(30) Priority: 22.09.1988 JP 236291/88
(43) Date of publication of application: 28.03.1990
(73) Proprietor: International Business Machines Corporation, Armonk, N.Y. 10504 (US)
(72) Inventor: Sekiya, Kazuo, Nerima-ku Tokyo-to (JP); Shiraishi, Yuichi, Yamato-shi Kanagawa-ken (JP)
(74) Representative: Burt, Roger James, Dr.

(56) References cited:
- EP-A- 0 195 203
- EP-A- 0 310 021
- WO-A-84/02027

## Description

The invention relates to a display system for converting gray levels of a display device. More particularly, the invention relates to the display system for converting first gray level signal of N bits (N is integer larger than or equal to 2) representing 2^{N} gray levels to second gray level signal representing 2^{M} gray levels (M is integer satisfying N>M≧1).

In the prior art, a converting table has been used which has 64 entries, each of which stores 4 bits, for converting a gray level signal representing 64 gray levels to a gray level signal representing 16 gray levels. Due to its large size, the Table was not included in a signal processing semiconductor chip. The table was included in a separate semiconductor chip. It is necessary access time period more than 50 - 100 nano seconds to access the Table, resulting in low operational speed and increased costs.

The invention converts first gray level signal of N bits/dot, which is supplied to a display device displaying 2^{N} gray levels/dot (N is integer larger than or equal to 2), to a second gray level signal of M bits/dot (M is integer satisfying N>M≧1). The second gray level signals are supplied to a display device which displays 2^{M} gray levels/dot. To perform the conversion, the invention includes means for separating the first gray level signal of N bits into higher M bits and lower N-M bits, 2^{N-M} tables each of which stores P x Q modification values satisfying P x Q ≧ 2^{N-M}, means for selecting one of the tables by using the N-M bits (P and Q is natural integer) means for adding the M bits and each of modification values of the selected table to generate P x Q second gray level signals. The number of display dots of the display device of 2^{N} gray levels is smaller than the number of display dots of the display device which displays 2^{M} gray levels. The gray levels include a real white level, a real back level and plural intermediate levels therebetween.

In order that the invention may be fully understood a preferred embodiment thereof will now be described with reference to the accompanying drawings in which:

Fig. 1 shows the circuit blocks of the display system of the present invention.

Figs. 2 and 3 shows flow charts of the operations of the display system.

Fig. 4 shows the gray levels of the dots displayed on the display device 11.

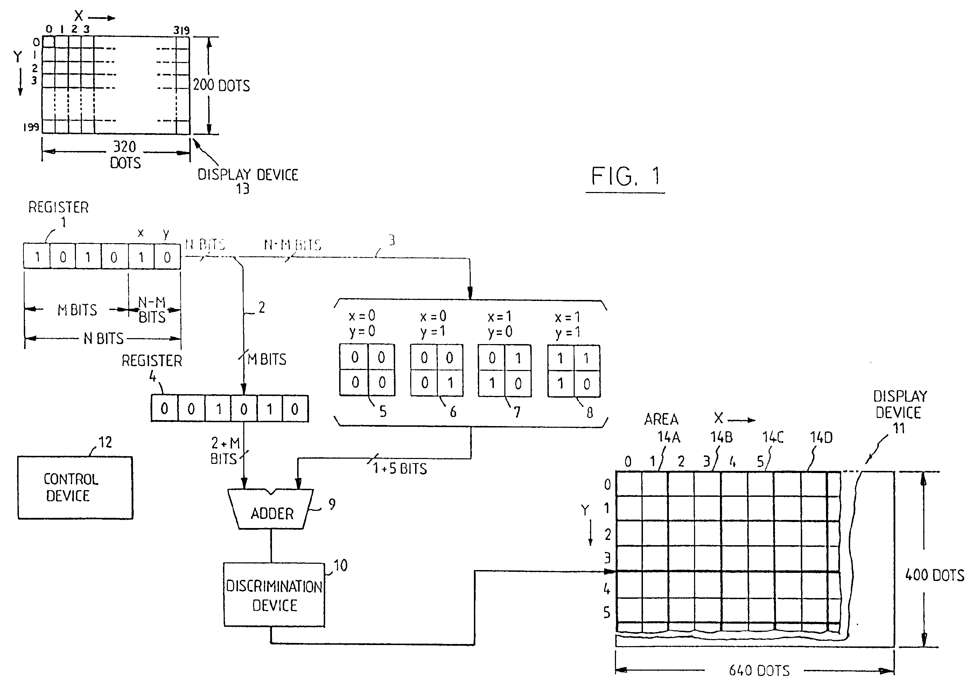

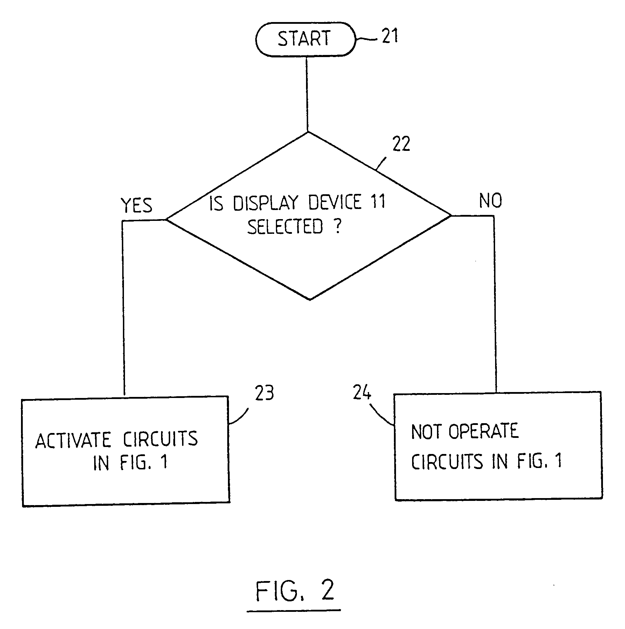

Fig. 1 shows an embodiment of the invention. A display device 13 is a CRT display device, for example, which has a display surface of 200 x 320 dots. Each dot displays 2^{N} gray levels, and a first gray level signal of N bits is used to represent 2^{N} gray levels. N is integer larger than or equal to 2.

A display device 11 is a display device of plasma display panel type, for example, which has a display surface of 400 x 640 dots. Each dot displays 2^{M} gray levels, and a second gray level signal of M bits is used to represent 2^{M} gray levels. M is integer satisfying N>M≧1.

In the invention, one dot of the display device 13 is converted to P x Q dots on the display device 11, and the P x Q satisfies P x Q ≧ 2^{N-M}. P and Q are natural integers, P represents the number of horizontal dots and Q represents the number of vertical dots. P x Q ≧ 2^{N-M} means that the number of P x Q dots larger than or equal to 2^{N-M} gray levels is necessary to represent 2^{N-M} gray levels. The next table shows the relations of the fractional N-M bits, 2^{N-M} gray levels and P x Q dots.

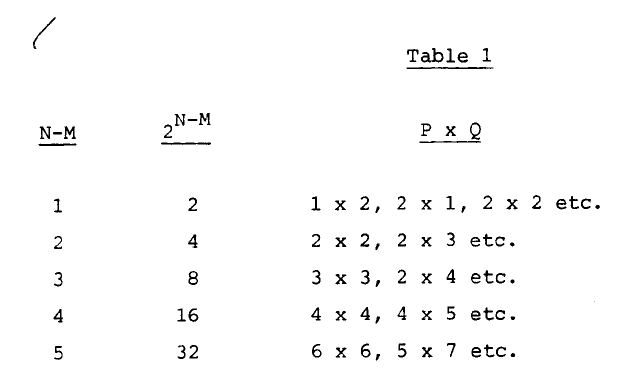

For each first gray level signal of N bits, P x Q second gray level signals, each of which has M bits, are generated In this embodiments, N=6 and M=4. That is, the display device 13 displays 2^{N}=2⁶=64 gray levels, and the display device 11 displays 2^{M}=2⁴=16 gray levels, and one dot of the display device 13 is converted to four dots which are represented by P x Q ≧ 2^{N-M}, (P=Q), i.e. 2⁶⁻⁴ = 2² = 4.

The circuit for performing the conversion includes N bit register 1, 2+M bit register 4, 2^{N-M} tables 5, 6, 7 and 8, an adder 9, a discrimination device 10 and a control device 12. The control device 12 controls the operations of the circuits. For simplifying the drawing, the connecting lines among the control device 12, the registers, the tables, the adder and the discrimination device are not shown.

Each dot of the display device 13 displays 64 gray levels, and each of these 64 gray levels is represented by 6 bits, and shown in the next Table 2.

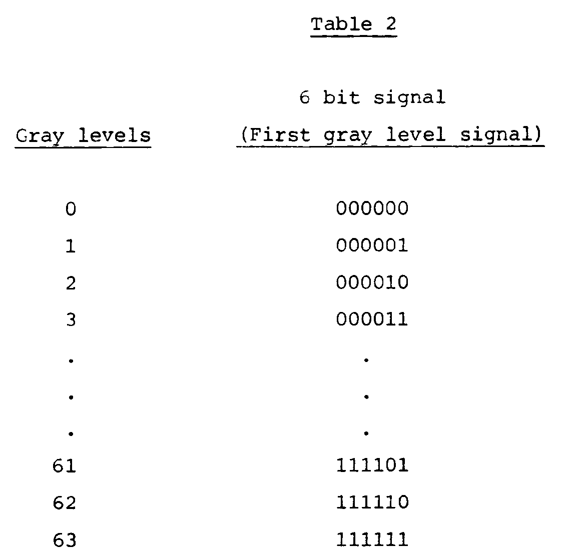

Each dot of the display device 11 displays 16 gray levels, and each of 16 gray levels is represented by four bits, as shown in the next Table 3.

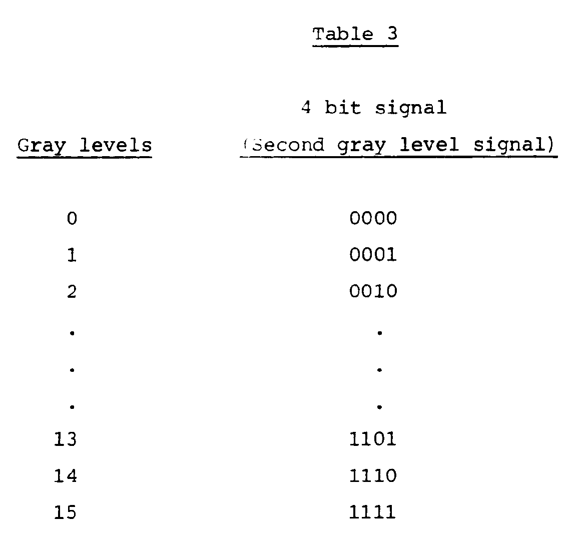

The control device 12 is a personal computer, for example, to which the CRT display device 13 displaying 64 gray levels/dot and having 200 x 320 dots is connected, as a standard attachment. The personal computer drives the plasma display device 11 displaying 16 gray levels/dot and having 400 x 640 dots, as optional attachment. Accordingly, the control device 12 generates the 6 bit signals for the CRT display device 13, as shown in the Table 2, and responds to the fact that the plasma display device 11 has been selected by the operator, to activates the circuit of the Fig. 1 to convert one 6 bit signal to four 4 bit signals. The operations are shown in blocks 22, 23 and 24 of Fig. 2. If the answer of the block 22 is No, the control device 12 does not activate the circuit of the Fig. 1, in the block 24.

The display device 13 has 400 scan lines and displays 200 dots in the vertical direction. That is, two scan lines are used to display one dot. The two horizontal scan lines are used to display a dot at position (X, Y) = (0, 0) of the display device 13 in the Fig. 1, and the upper scan line is called as OA and the lower scan line is called as OB. The upper half of the dot is displayed by the upper scan line OA, and the lower half of the dot is displayed by the lower scan line OB, so that one dot is displayed. Accordingly, the control device 12 generates the same signals during the scans of the upper and lower scan lines OA and OB.

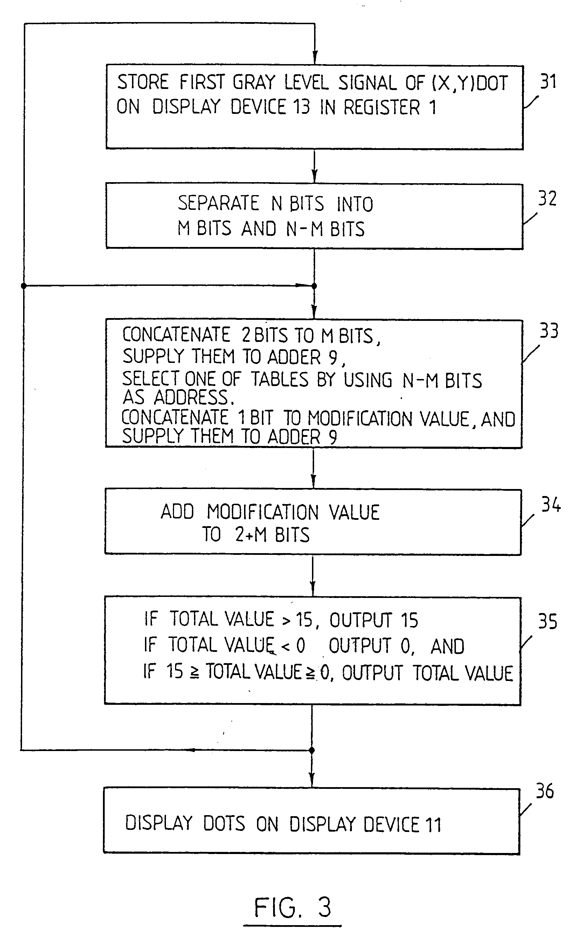

The operations of the block 24 will be described with referring to the flow chart of the Fig. 3. In a block 31 in the Fig. 3, the control device 12 generates the first gray level signal for the dot position (X, Y) of the display device 13, and stores it in the register 1. The operations of the block 31 are repeated two times for the upper and lower scan lines OA and OB. The operation starts from the upper scan line OA. During displaying the upper half of dot (0, 0) by the upper scan line, the second gray level signals for the dots (0, 0) and (1, 0) of the display device 11 are generated.

It is assumed that the control device 12 generates the first gray level signal 101010 (decimal value 42). The value is stored in the register 1. Next, the control device 12, in the block 32, supplies the higher 4 bits, i.e. M bits, 1010 of the 101010 into the lower 4 bit positions of the register 4 through the line 2. The higher 2 bit positions of the register 4 are always 0 0. The reasons for concatenating the higher 2 bits in the register 4 will be described latter. The control device 12 uses the lower 2 bits, i.e. N-M bits, on the line 3 of the first gray level signal 101010 as an address to select one of the Tables 5, 6, 7 and 8 (block 33). The number of the tables are represented by 2^{N-M}, and in this embodiment, 4 tables are prepared. The lower 2 bits are represented by x and y. Since x = 1 and y = 0, the Table 7 is selected. Each table stores 4 modification values, i.e. P x Q, and each modification value corresponds to each of 4 dots of each of areas 14A, 14B, 14C, 14D, ... . The modification value is represented by the decimal value, 0 corresponds to the binary value 00000, 1 corresponds to the binary value 00001, and these binary values are stored in the table. Any value in the range of +15 - -15 is used as the modification value. From the viewpoint of fidelity, the preferred range is +3 - -3. The modification value has 5 bits representing +15 - -15, and a negative value is represented by complement of 2. The higher 1 bit is concatenated to the 5 bits from the table by a sign extension. For example, in the case that the modification value is +1, 00001 is stored in the table, and 0 is concatenated to the 00001 by the sign extension, so that the input to the adder 9 is 000001. In the case that the modification value in the table is -1, 11111 is stored in the table, 1 is concatenated to the 11111 by the sign extension, so that 111111 is supplied to the adder 9. In this manner, since the other input of the adder 9 is 6 bits, the 2 bits are concatenated in the register 4.

To generate the second gray level signal for the dot (0, 0) of the area 14A of the display device 11, the control device 12 concatenates the bit 0 to the upper left modification value 00000 in the Table 7, and supplies the 000000 to the adder 9.

Next, the control device 12, in the block 34, activates the adder 9 to add both the inputted bits. That is, the 000000 representing the upper left modification value 0 in the Table 7 is added to the 001010 (2 + M bits), and the total value 001010 is generated.

The control device 12 supplies the total value 001010 to the discrimination device 10. The discrimination device 10 generates on the output line the value 15 (binary value 1111), if the total value is larger than 15, generates 0 (binary value 0000) on the output line, if the total value is smaller than 0, that is the total value is negative value, and supplies the lower 4 bits of the total value on the output line if the total value satisfies 15 ≧ total value ≧ 0 (block 35). To perform the discrimination, the upper 2 bits of the total value are determined or tested. When the most significant bit of the total value is 1, it indicates that the total value is negative, when the higher 2 bits of the total value is 01, it indicates that the total value is larger than 15, and when the higher 2 bits of the total value is 00, it indicates that the relation 15 ≧ total value ≧ 0 is satisfied. In the case of the upper left modification value in the Table 7, the value is 001010, the 4 bits 1010 is supplied to the display device 11 as the second gray level signal for the dot (0, 0) in the area 14A of the display device 11, whereby the gray level 10 (i.e. binary value 1010) is displayed at the dot (0, 0) of the display device 11.

Next, in order to generate the second gray level signal for the dot (1, 0) in the area 14A of the display device 11, the control device 12 reads out the upper right modification value 1 (binary value 00001) in the Table 7, converts it to the 6 bits 000001 by the sign extension, supplies the 6 bits to the adder 9 and supplies the 6 bits 001010 in the 2+M register 4 to the adder 9. Next, in the block 34, both the values are added. The total value is 001011 and it satisfies 15 ≧ total value ≧ 0, the bits 1011 is supplied to the display device 11 as the second gray level signal for the dot (1, 0) in the area 14A of the display device 11, whereby the gray level 11 (binary value 1011) is displayed at the dot (1, 0) of the display device 11.

The control device 12 performs the level conversion for the second dot (1, 0) in the dot line 0 of the display device 13, in the same manner, whereby the second gray level signals for the dots (2, 0) and (3, 0) in the area 14B of the display device 11 are generated and these dots are displayed. In this manner, whenever the third dot and subsequent dots in the dot line 0 of the display device 13 are displayed, two dots in the area 14C and the subsequent areas are displayed. In this manner, the same image is displayed on both the display devices 11 and 13, wherein the number of gray levels and the number of dots of the display device 13 differ from that of the display device 11. In other cases, only the display device 11 is operated, while the display device 13 is not operated, and vice versa.

Next, the control device 12 starts the lower scan line OB of the dot line 0 of the display device 13. The same first gray level signals as that used for the upper scan line OA are used again to display the lower half of each dot in the dot line 0 of the display device 13, during which the second gray level signals for the dot line 1 of the display device 11 are generated. That is, the first gray level signal 101010 for the dot (0, 0) of the display device 13 is stored in the register 4, again (block 31 in the Fig. 3).

And, in the described manner, the operations of the blocks 32 and 33 are performed to select the Table 7. In this case, however, the lower left modification value 1 (00001) in the Table 7 is read out, and the sign extension is performed, and the value 000001 is added to the 6 bits 001010 of the register 4, and the total value 001011 is supplied to the discrimination device 10. Since the total value 001011 satisfies 15 ≧ total value ≧ 0, the 4 bit second gray level signal 1011 representing the total value 001011 is used to display the gray level 11 at the dot (0, 1) in the area 14A of the display device 11. Next, the operations return to the block 33, the control device 12 reads out the lower right modification value 00000 in the Table 7, performs the sign extension to generate 000000, and supplies it to the adder 9. The adder 9 adds the value 000000 and the value 001010 of the register 4 to generate the total value 001010 (block 34). The total value 001010 is determined in the discrimination device 10 (block 35).

Since the total value 001010 satisfies the condition 15 ≧ total value ≧ 0, the second gray level signal 1010 representing the total value is used to display the gray level 10 (1010) at the dot (1, 1) in the area 14A of the display device 11. In this manner, from the first gray level signal of the 6 bits (N bits) for one dot (0, 0) of the display device 13, the second gray level signals for the four dots (0, 0), (1, 0), (0, 1) an 1, 1) in the area 14A of the display device 11 are generated.

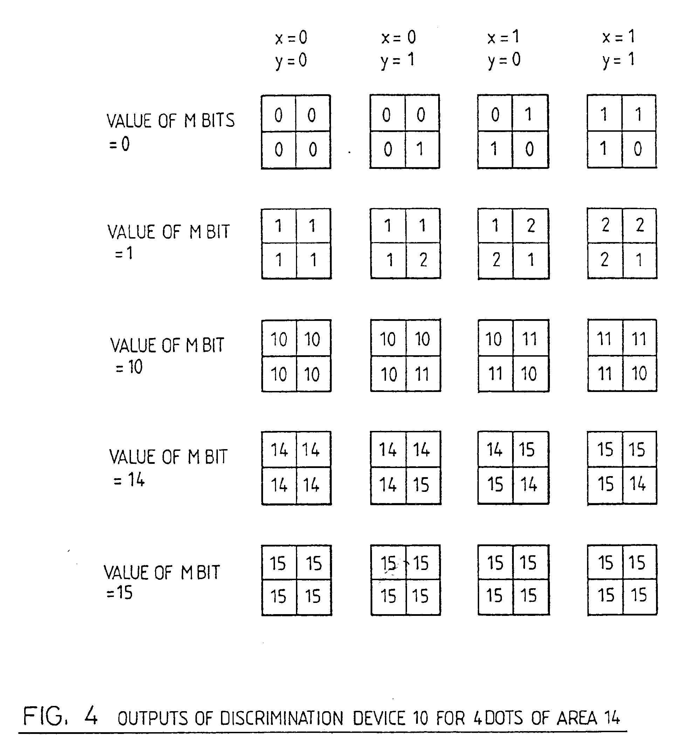

Fig. 4 shows the gray levels of the second signals for the four dots in the areas 14 generated for the value of the M bits, in the case that the modification values in the Tables 5, 6, 7 and 8 are used. The gray levels described hereinbefore are shown in the area 14 for x = 1 and y = 0 and the value of M bits = 10. As apparent from the gray levels shown in the Fig. 4, when the value of the M bits = 15, all the four dots become real white, i.e. level 15, that is, the four levels among the 64 first gray levels degenerate into one level of the second gray levels, so that 61 gray levels (16 x 4 - 3 = 61) are displayed on the display device 11. Larger P x Q than 2^{N-M} could be used, and a proper combination of positive and negative modification values could be used, so that the number of degenerated levels is controlled.

In the described embodiment, the example of N=6, M=4 and P=Q=2 was described. But, another values could be used. The values shown in the Table 1 are used as P and Q. Although the display devices 11 and 13 were described as the plasma display device and CRT display device, respectively, other types of display devices, such as a liquid crystal display device, an electroluminescence display device could be used. And, by using other values as the modification values of the Tables 5, 6, 7 and 8, the characteristics of the gray levels displayed on the display device 11 could be varied.

Although prior art has required a table of 64 x 4 x 4 = 1024 bit capacity to convert the signals representing the 64 gray levels to the signals representing the 16 gray levels as described in the embodiment, the invention requires a table of 4 x 4 x 5 = 80 bit capacity only. In this manner, since the number of bits of the tables is small, the Tables 5, 6, 7 and 8 can be included in the signal processing semiconductor chip in the invention, the necessity of preparing the table in a separate semiconductor chip is avoided, whereby the time period more than 50 - 100 nano seconds for accessing the table in the separate semiconductor chip is saved. In this viewpoint, the invention increases the operational speed and decreases the cost.

In accordance with the invention, it is possible to display the same image on both the two kinds of display devices which have the different number of gray levels and the different number of display dots. This produces the following merits. In the case of service businesses, such as bank, hotel, a receptionist and a customer sit facing each other with a low counter or table between, the receptionist sees one display device of a display station, with the backside of the display device being faced to the customer, and it is required to prepare the other display device for the customer. In this case, the lower gray level display device is used by the receptionist, and the high gray level display device is prepared for the customer. And, both the receptionist and customer see the same image on their display device.

In accordance with the present invention, it is possible to display on the low gray level display device the image of the substantially same gray levels as that of the high gray level display device. That is, as described in the embodiment, although the display device 11 displays only 16 gray levels for each dot, the display device 11 displays the 61 gray levels by using four dots for one dot of the display device 13 and displaying the image of the one dot of the display device 13 on the four dots on the display device 11.

## Claims

1. A display system for converting first gray level signals each of N bits, where N is an integer larger than or equal to 2, representing 2^{N} gray levels and each corresponding to a dot on a first display device (13) of 2^{N} gray levels to second gray level signals representing 2^{M} gray levels, where M is an integer satisfying N>M≧1,
said display system comprising:
means (1, 2, 4) for separating each said first gray level signal of N bits into higher M bits and lower N-M bits;
2^{N-M} tables (5-8) each of which stores P x Q modification values satisfying P x Q ≧ 2^{N-M}, where P and Q are natural integers;
means (3) for selecting one of said tables by using said N-M bits;
means (9) for adding said M bits and each of the modification values of said selected table to generate P x Q second gray level signals; and
means (10) for supplying said second gray level signals to a second display device (11) of 2^{M} gray levels, whereby each dot on the first display device (13) is converted to P x Q dots on the second display device (11).

2. A display system as claimed in claim 1, comprising:
first display device displaying 2^{N} gray levels (N is integer larger than or equal to 2);
second display device displaying 2^{M} gray levels (M is integer satisfying N>M≧1); and
means for generating first gray level signal of N bits representing 2^{N} gray levels.

3. A display system as claimed in claim 2 comprising means for supplying said first gray level signals to said first display device.

## Patentansprüche

1. Ein Anzeigesystem zum Umwandeln erster Graustufensignale, jeweils bestehend aus N Bits wobei N eine Ganzzahl größer oder gleich 2 ist, die 2^{N} Graustufen darstellen und jeweils einem Punkt in einer ersten Anzeigevorrichtung (13) mit 2^{N} Graustufen entsprechen, in zweite Graustufensignale, die 2^{M} Graustufen entsprechen, wobei M eine Ganzzahl ist, die der Bedingung N>M≧1 genügt,
wobei dieses System umfaßt:
Mittel (1, 2, 4) zum Trennen jedes dieser ersten Graustufensignale aus N Bits in M höhere und N-M niedere Bits;
2^{N-M} Tabellen (5-8), deren jede P x Q Änderungswerte abspeichern, die der Bedingung P x Q ≧ 2^{N-M} genügen, wobei P und Q natürliche Ganzzahlen sind;
Mittel (3) zum Anwählen einer dieser Tabellen durch Benutzen dieser N-M Bits;
Mittel (9) zum Addieren der M Bits und jedes der Änderungswerte der angewählten Tabelle zum Generieren von P x Q zweite Graustufensignale; und
Mittel (10) zum Senden der zweiten Graustufensignale an eine zweite Anzeigevorrichtung (11) mit 2^{M} Graustufen, wobei jeder Punkt in der ersten Anzeigevorrichtung (13) in P x Q Punkte in der zweiten Anzeigevorrichtung (11) umgewandelt wird.

2. Eine Anzeigevorrichtung gemäß Anspruch 1, enthaltend:
eine erste Anzeigevorrichtung, die 2^{N} Graustufen anzeigt (wobei N eine Ganzzahl größer/gleich 2 ist);
eine zweite Anzeigevorrichtung, die 2^{M} Graustufen anzeigt (wobei M eine Ganzzahl ist, die der Bedingung N>M≧1 genügt); und
Mittel zum Generieren eines ersten Graustufensignals mit N Bits, die 2^{N} Graustufen darstellen.

3. Ein Anzeigesystem gemäß Anspruch 2, enthaltend Mittel zum Senden der ersten Graustufensignale an die erste Anzeigevorrichtung.

## Revendications

1. Dispositif d'affichage pour convertir des premiers signaux de niveau de gris chacun de N bits, où N est un nombre entier supérieur ou égal à 2, représentant 2^{N} niveaux de gris et chacun correspondant à un point sur un premier dispositif d'affichage (13) de 2^{N} niveaux de gris en des signaux de niveau de gris représentant 2^{M} niveaux de gris, où M est un nombre entier satisfaisant N>M≧1, ledit système d'affichage comprenant :
un moyen (1, 2, 4) pour séparer chaque dit premier signal de niveau de gris de N bits en M bits supérieurs et N-M bits inférieurs,
2^{N-M} tables (5 - 8) dont chacune mémorise P x Q valeurs de modification satisfaisant P x Q ≧ 2^{N-M}, où P et Q sont des nombres entiers naturels,
un moyen (3) pour sélectionner une desdites tables en utilisant lesdits N-M bits,
un moyen (9) pour additionner lesdits M bits et chacune des valeurs de modification de ladite table sélectionnée afin de produire P x Q seconds signaux de niveau de gris, et
un moyen (10) pour délivrer lesdits seconds signaux de niveau de gris à un dispositif d'affichage (11) de 2^{M} niveaux de gris, d'où il résulte que chaque point sur le premier dispositif d'affichage (13) est converti en P x Q points sur le second dispositif d'affichage (11).

2. Dispositif d'affichage selon la revendication 1, comprenant :
un premier dispositif d'affichage affichant 2^{N} niveaux de gris (N est un nombre entier supérieur ou égal à 2),
un second dispositif d'affichage affichant 2^{M} niveaux de gris (M est un nombre entier satisfaisant N>M≧1), et
un moyen pour produire un premier signal de niveau de gris de N bits représentant 2^{N} niveaux de gris.

3. Dispositif d'affichage selon la revendication 2, comprenant un moyen pour délivrer lesdits premiers signaux de niveau de gris audit premier dispositif d'affichage.
